# EUROPEAN PATENT SPECIFICATION

(11) **EP 2 835 345 B1**
(45) Date of publication and mention of the grant of the patent: **08.08.2018**
(21) Application number: 13809042.8
(22) Date of filing: 24.06.2013
(51) Int. Cl.: C01B 3/38, C01B 3/48, H01M 8/06

(54) **FUEL TREATMENT DEVICE**
BRENNSTOFFBEHANDLUNGSVORRICHTUNG
DISPOSITIF DE TRAITEMENT D'UN COMBUSTIBLE

(30) Priority: 25.06.2012 JP 2012141979
(43) Date of publication of application: 11.02.2015
(73) Proprietor: Panasonic Intellectual Property Management Co., Ltd., Osaka-shi, Osaka 540-6207 (JP)
(72) Inventor: HONDA, Naoya, Osaka-shi Osaka 540-6207 (JP); MITA, Yuki, Osaka-shi Osaka 540-6207 (JP)
(74) Representative: Schwabe - Sandmair - Marx
(86) International application number: PCT/JP2013/003942
(87) International publication number: WO 2014/002470

(56) References cited:
- EP-A1- 1 094 031
- EP-A1- 2 735 541
- EP-A1- 2 835 345
- EP-A1- 2 837 595
- WO-A1-2014/002468
- JP-A- 2004 288 434
- JP-A- 2005 193 135
- JP-A- 2008 019 159
- JP-A- 2010 058 995
- JP-A- 2010 138 037
- JP-A- 2011 146 311
- US-A1- 2008 090 112

## Description

### Technical Field

The present invention relates to a fuel processing apparatus that generates hydrogen to be supplied to a fuel cell system.

### Background Art

A fuel cell system such as a household cogeneration system includes a fuel processing apparatus that generates hydrogen-containing gas and a fuel cell that generates electricity using the hydrogen-containing gas generated by the fuel processing apparatus.

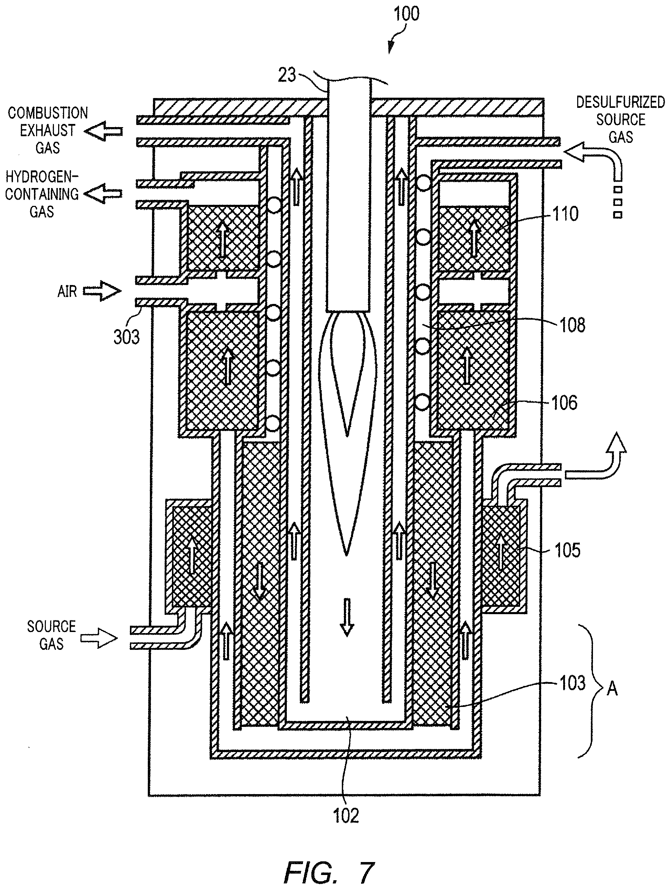

As illustrated in FIG. 7, fuel processing apparatus 100 for a conventional fuel cell system includes: combustion section 102 including burner 23; desulfurization section 105 provided to surround combustion section 102, which removes a sulfur component from a source gas such as hydrocarbon fuel including city gas, LPG, and others; vaporization flow channel 108 in which the source gas and steam are mixed; reforming section 103 that causes a steam reforming reaction of mixed gas at a high temperature of approximately 600°C and generates hydrogen-containing gas containing hydrogen as the main component; shift-conversion section 106 in which the concentration of carbon monoxide which is poisonous to the catalyst of a fuel cell is reduced to approximately 0.5% by the CO shift-conversion reaction; and selective oxidation section 110 that further reduces the carbon oxide concentration to approximately 10 ppm or lower by the selective oxidation reaction (for example, see PTL 1).

Desulfurization section 105 is provided with a hydrodesulfurization catalyst. In terms of the relationship with the activating temperature of the hydrodesulfurization catalyst, desulfurization section 105 is preferably set and maintained at a high temperature of 250°C to 300°C. However, as illustrated in FIG. 7, desulfurization section 105 is provided outside of fuel processing apparatus 100. Accordingly, desulfurization section 105 is easily affected by an external environment, making it difficult to set and maintain the temperature of the desulfurization section 105 at an optimum temperature. When the desulfurization section 105 is kept operating at a temperature lower than the optimum temperature, the activity of the hydrodesulfurization catalyst is reduced, shortening the lifetime of the hydrodesulfurization catalyst. Since the lifetime of a fuel processing apparatus is generally considered as 10 years, there has been a request for a method for reducing the influence of the temperature from the external environment.

As a means for reducing the influence of the temperature of the external environment, providing a heat insulating section at an outer periphery of fuel processing apparatus 100 (desulfurization section 105) has been considered. However, there is a problem that providing further heat insulation material to the outer periphery of fuel processing apparatus 100 increases the volume of the entire fuel cell system. Alternatively, the amount of hydrodesulfurization catalyst added to desulfurization section 105 may be increased. However, there is a problem that the increased amount of the hydrodesulfurization catalyst added increases the size of the apparatus and the cost for the fuel processing apparatus.

Furthermore, as illustrated in FIG. 7, in a conventional fuel processing apparatus, there was a region A where no component is arranged around reforming section 103 that reaches a high temperature. Since reforming section 103 is exposed, it was necessary to provide a thick insulating material at an outer periphery of the apparatus in order to prevent the emission of heat to outside of the apparatus. The more the amount of heat insulating material, the more the volume of the apparatus becomes, despite the need for miniaturization of the apparatus. Furthermore, as illustrated in FIG. 7, conventional shift-conversion section 106 is provided at one part. Since shift-conversion section 106 is cooled on the inner-rim side contacting vaporization flow channel 108, exothermic reaction is mainly occurred on the upstream side of the gas. Accordingly, there is a problem that the reaction efficiency of the shift-converter catalyst is reduced due to uneven temperature distribution in the shift-converter catalyst. To solve the problem, a fuel processing apparatus having a catalyst with high reaction efficiency has been needed.

Further, various positional relationships among components of a fuel processing apparatus (a desulfurization section, a vaporization section, a reforming section, a shift-conversion section and the like), have been proposed.

PTL 2 discloses a reforming apparatus in which a vaporization section is so provided as to surround a reforming section. However, in the invention disclosed in PTL 2, while the amount of heat radiated from the reforming section can be limited, alleviation of influence of the temperature of the external environment on the desulfurization section is not suggested.

PTL 3 discloses a fuel processing apparatus which is housed inside an outer package with a plurality of reactors closely arranged in parallel. In the configuration in the invention disclosed in PTL 3, however, the influence of the temperature of the external environment is reduced by a granular heat insulating material filling the outer package, and therefore it is difficult to miniaturize the size of the apparatus. PTL3 does not suggest that the influence of the temperature on the desulfurization section from the external environment is reduced. Accordingly, a fuel processing apparatus which is less affected by the temperature of the external environment has been needed.

In addition, PTLs 4 to 9 disclose a fuel processing apparatus in which a vaporization section, a reforming section, a shift-conversion section and the like are concentrically disposed about a combustion section; PTL 10 to 11 disclose a fuel processing apparatus in which a vaporization section, a reforming section, a shift-conversion section and the like are vertically disposed.

In PTL 12, a desulfurization section is disposed around a reforming section, whereby the temperature of the desulfurization section is appropriately adjusted.

### Citation List

### Patent Literature

PTL 1
   WO 2009/150792
PTL 2
   Japanese Patent Application Laid-Open No. 2005-104776
PTL 3
   Japanese Patent Application Laid-Open No. 2009-88346
PTL 4
   Japanese Patent Application Laid-Open No. 2004-288434
PTL 5
   Japanese Patent Application Laid-Open No. 2002-356309
PTL 6
   Japanese Patent Application Laid-Open No. 2000-178003
PTL 7
   United States Patent No. 7014822
PTL 8
   WO2002/098790
PTL 9
   US Patent Application Publication No. 2004/0144029
PTL 10
   Japanese Patent Application Laid-Open No. 2009-87586
PTL 11
   US Patent Application Publication No. 2009/0087705
PTL 12
   United States Patent No. 7332003

EP 2 735 541 A1 discloses a fuel processing device, including: a combustion unit equipped with a heat source; a desulfurization unit for extracting a sulfur component from the source gas; a reforming unit for generating, from the desulfurized source gas, a hydrogen-containing gas having hydrogen as a main component thereof; and a low-temperature conversion unit equipped with an exothermic catalyst for reducing the impurity concentration in the hydrogen-containing gas. The reforming unit and the desulfurization unit are configured so as to surround the combustion unit, and are disposed concentrically in the given order facing outwards from the combustion unit. The present invention further includes a preheating passage which is connected to the desulfurization unit, and which is provided to a bottom part of the combustion unit via a heat insulation material, such that the source gas is preheated by heat from the combustion unit.

WO 2014/002468 A1 discloses a fuel processor manufactured at low cost with a small processing variation and equipped with a spiral channel of an evaporating section,

EP 2 835 345 A1 discloses a fuel treatment device provided with: a combustion part; a desulfurization part in which the sulfur component is removed from a feed gas; an evaporation channel in which the feed gas and reforming water are heated to obtain a mixed gas; a reforming part in which a hydrogenous gas is yielded from the mixed gas; a high-temperature modification part in which the carbon monoxide concentration in the hydrogenous gas is lowered; and a low-temperature modification part which is equipped with an exothermic-type catalyst whereby the carbon monoxide concentration in the hydrogenous gas is further lowered. The evaporation channel has been disposed so that the desulfurization part and the reforming part communicate with each other and that the channel passes over the desulfurization part. The high-temperature modification part makes the reforming part communicate with the low-temperature modification part and has been disposed over the desulfurization part along the evaporation channel.

### Summary of Invention

### Solution to Problem

It is an object of the present invention to provide a fuel processing apparatus less easily affected by a temperature of an external environment. It is another object of the present invention to provide a fuel processing apparatus having a catalyst with high reaction efficiency.

### Technical Problem

A fuel processing apparatus according to a first aspect of the present invention includes: a combustion section having a heat source; a desulfurization section that removes a sulfur component from a source gas; a vaporization flow channel that heats the desulfurized source gas and reforming water to obtain mixed gas; a reforming section that generates hydrogen-containing gas containing hydrogen as a main component from the mixed gas; a high-temperature shift-conversion section that reduces a carbon monoxide concentration in the hydrogen-containing gas; and a low-temperature shift-conversion section including an exothermic catalyst that further reduces the carbon monoxide concentration of the hydrogen-containing gas whose carbon monoxide concentration is reduced. The vaporization flow channel is disposed in such a manner that the desulfurization section and the reforming section are in communication with each other through the vaporization flow channel, and that the vaporization flow channel passes through a region above the desulfurization section, and the high-temperature shift-conversion section is disposed in such a manner that the reforming section and the low-temperature shift-conversion section are in communication with each other through the high-temperature shift-conversion section, and that the high-temperature shift-conversion section is provided above the desulfurization section along the vaporization flow channel. The invention is defined by the subject matter of the appended claim.

### Advantageous Effects of Invention

According to the present invention, a fuel processing apparatus with a catalyst having high reaction efficiency is provided. Further, according to the present invention, a fuel processing apparatus which is less affected by a temperature of an external environment is provided.

### Brief Description of Drawings

FIG. 1 is a cross-sectional view of a fuel processing apparatus according to an embodiment;
FIG. 2 is a cross-sectional view illustrating the relationship between the first cylinder and the second cylinder as a part of the fuel processing apparatus according to the embodiment;
FIG. 3 is a perspective view of a part of fuel processing apparatus (spiral wavy tilted part) according to the embodiment;
FIG. 4 is a perspective view of a part of fuel processing apparatus (third cylinder) according to the embodiment;
FIG. 5 is an enlarged cross-sectional view of a part of fuel processing apparatus according to the embodiment (vaporization flow channel);
FIG. 6 is a cross-sectional view of a fuel processing apparatus according to a variation of the embodiment; and
FIG. 7 is a cross-sectional view of a conventional fuel processing apparatus.

### Description of the embodiments

The present invention will be described below based on an embodiment. However, the present invention is not limited to the following the embodiment. Components with the same function or similar function are assigned with the same or similar reference numerals, and the description for the components will be omitted. Note that the drawings are schematic. Accordingly, specific dimensions and others will be determined with reference to the following description. Needless to say, relationships of dimensions of the components and ratio may be different between the drawings.

### 1. Fuel Processing Apparatus

A fuel processing apparatus of the embodiment of the present invention includes functional parts that generate hydrogen gas from source gas such as hydrocarbon gas (methane gas). That is, the fuel processing apparatus of the embodiment of the present invention includes a combustion section, a desulfurization section, a vaporization flow channel, a reforming section, and a shift-conversion section. Preferably, the shift-conversion section includes a high-temperature shift-conversion section and a low-temperature shift-conversion section. Further, the fuel processing apparatus of the embodiment of the present invention may include a selective oxidation section, an ammonia decomposition section and the like. The functions of the functional parts will be described later.

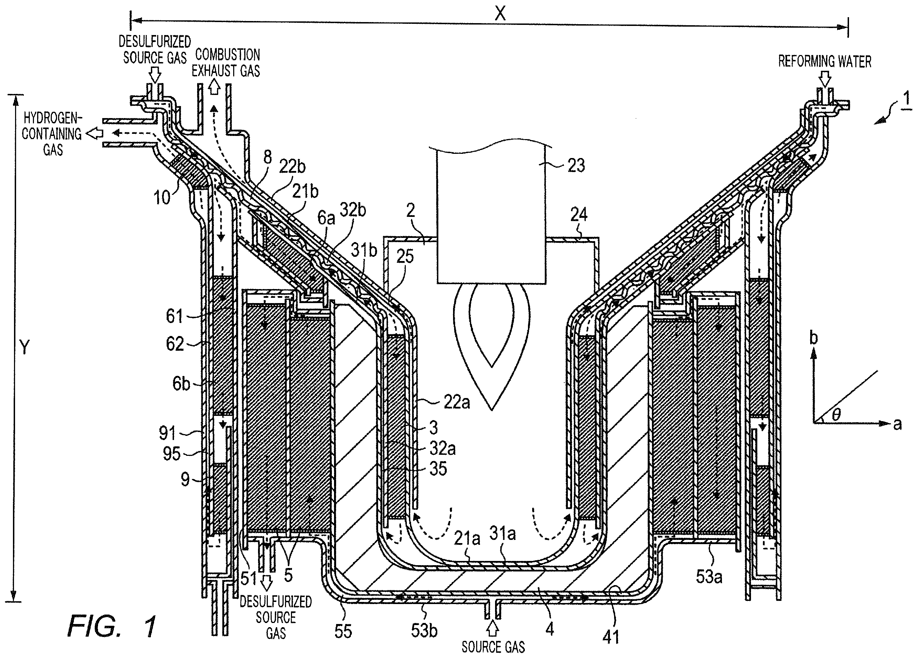

FIG. 1 is a schematic sectional view of fuel processing apparatus 1 according to the embodiment. Fuel processing apparatus 1 includes: combustion section 2 having burner 23 as a heat source; desulfurization section 5 that removes a sulfur component from source gas; vaporization flow channel 8 that heats the desulfurized source gas and reforming water to obtain mixed gas of the source gas and steam; reforming section 3 that generates hydrogen-containing gas containing hydrogen as the main component from the mixed gas; high-temperature shift-conversion section 6a that reduces concentration of carbon monoxide in the hydrogen-containing gas; low-temperature shift-conversion section 6b that further reduces the concentration of the impurity (for example, carbon monoxide) in the hydrogen-containing gas in which the concentration of carbon monoxide is reduced.

Fuel processing apparatus 1 may further include ammonia decomposition section 9 that removes ammonia gas from the gas shift-converted by the shift-conversion section, and selective oxidation section 10 that further reduces the carbon oxide from the gas shift-converted by the shift-conversion section.

In fuel processing apparatus 1, reforming section 3 is so disposed as to surround combustion section 2. Desulfurization section 5 is so disposed as to surround reforming section 3. Vaporization flow channel 8 is so disposed as to be obliquely tilted from the upper end of reforming section 3 toward outside, and to pass through a region above desulfurization section 5. High-temperature shift-conversion section 6a is disposed above desulfurization section 5 along vaporization flow channel 8. Low-temperature shift-conversion section 6b is so disposed as to surround desulfurization section 5.

Ammonia decomposition section 9 is disposed below low-temperature shift-conversion section 6b (downstream side of the direction of the gas flow). In addition, selective oxidation section 10 is provided along vaporization flow channel 8, and disposed outside of low-temperature shift-conversion section 6b.

The functional parts are in communication with one another. First, desulfurization section 5 and vaporization flow channel 8 are in communication with each other through a pipe not illustrated in the drawings. Desulfurization section 5 and reforming section 3 are in communication with each other through vaporization flow channel 8. Reforming section 3 and low-temperature shift-conversion section 6b are in communication with each other through high-temperature shift-conversion section 6a. Further, low-temperature shift-conversion section 6b and selective oxidation section 10 are in communication with each other through ammonia decomposition section 9.

In addition, fuel processing apparatus 1 includes combustion section cylinder 22, first cylinder 21, second cylinder 32, third cylinder 31, fourth cylinder 41, fifth cylinder 51, sixth cylinder 61, seventh cylinder 62, eighth cylinder 91, and bottom section 53 (the reference numeral is not shown in the drawing).

The above-mentioned parts are so disposed as to surround combustion section 2. Thus, the above-mentioned parts define spaces concentric about combustion section 2. In the spaces, the above-described functional parts (combustion section 2, desulfurization section 5, vaporization flow channel 8, reforming section 3, shift-conversion section (high-temperature shift-conversion section 6a and low-temperature shift-conversion section 6b), ammonia decomposition section 9, and selective oxidation section 10) are disposed.

It is preferable to use a metal as the material of combustion section cylinder 22, first cylinder to eighth cylinder 21, 32, 31, 41, 51, 61, 62, and 91, and bottom section 53 of fuel processing apparatus 1. Here, any metal material may be used as long as molding can be performed and the material is durable at the highest temperature of the component during processing. To be more specific, a stainless steel plate may be used, for example.

Fuel processing apparatus 1 can be manufactured by concentrically inserting the cylinders to combustion section 2. Vaporization flow channel 8 is so disposed as to be obliquely tilted toward outside from the upper end of reforming section 3 and to pass through a region above desulfurization section 5 and low-temperature shift-conversion section 6b, and thus, vaporization flow channel 8 can be provided without interfering with the sections. In addition, pipes for connecting the fuel processing apparatus and the external apparatus are disposed at the bottom and the side surfaces of the fuel processing apparatus, the sections do not interfere with each other when assembling the apparatus by inserting the cylinders. Accordingly, fuel processing apparatus 1 can be easily manufactured.

### 2. Flow of Fuel Process

The fuel processing apparatus of the embodiment of the present invention generates hydrogen gas from source gas such as hydrocarbon gas (methane gas). This process flow includes a source gas desulfurizing process, a reforming process, and a shift-conversion process, which are performed in the named order. Preferably, the shift-conversion process is performed in two stages of a high temperature shift-conversion and a low temperature shift-conversion. Further an ammonia decomposition process, and a selective oxidation process may be included.

The process flow in fuel processing apparatus 1 illustrated in FIG. 1 is described.

### (Desulfurization)

Source gas containing hydrocarbon (such as methane) fuel is supplied from a source gas supply inlet provided at cavity 53b of bottom section 53 in fuel processing apparatus 1. The source gas may be LP gas, city gas, or the like. The source gas thus supplied is conveyed to desulfurization section 5 through desulfurization channel 55, and reacted with hydrodesulfurization catalyst filling desulfurization section 5. As a result, the sulfur component in the source gas is removed.

### (Reforming)

Next, the source gas thus desulfurized is supplied to vaporization flow channel 8 through a pipe (not illustrated). Through the pipe not illustrated in the drawing, a desulfurized source gas outlet disposed at bottom section main body 53a and an end of vaporization flow channel 8 are in communication with each other. On the other hand, reforming water supplied to vaporization flow channel 8 is heated and vaporized. The desulfurized source gas and the vaporized reforming water are mixed while flowing through vaporization flow channel 8, thus generating a mixed gas.

The mixed gas obtained is supplied to reforming section 3 filled with reformer catalyst. In reforming section 3, hydrogen-containing gas is generated from the mixed gas.

### (Shift Conversion: High Temperature Shift-Conversion)

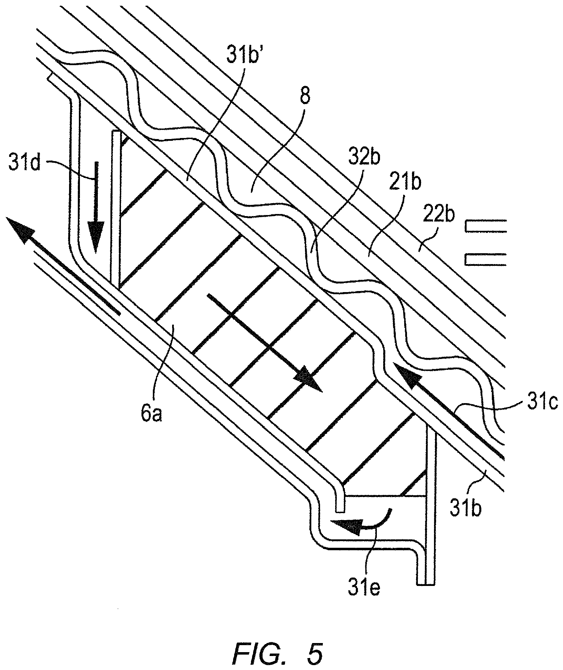

The hydrogen-containing gas generated in reforming section 3 is delivered to high-temperature shift-conversion section 6a (see FIG. 5) from the lower end of reforming section 3 through channel 35. As illustrated in FIG. 5, high-temperature shift-conversion section 6a is provided along vaporization flow channel 8. The hydrogen-containing gas thus conveyed is reacted with the high-temperature catalyst filling high-temperature shift-conversion section 6a, thus generating high temperature shift-conversion gas.

### (Conversion: Low Temperature Shift-Conversion)

The high temperature shift-conversion gas is conveyed to low-temperature shift-conversion section 6b through the lower end of high-temperature shift-conversion section 6a. The high temperature shift-conversion gas is again converted in low-temperature shift-conversion section 6b, and thus the carbon monoxide concentration in the hydrogen-containing gas is further reduced.

### (Ammonia Decomposition)

The low temperature shift-conversion gas is conveyed to ammonia decomposition section 9 through low-temperature shift-conversion section 6b. In ammonia decomposition section 9, ammonia gas contained in the low temperature shift-conversion gas is removed.

In the case where the flow of the combustion process does not include the ammonia decomposition process, it is preferable to continuously dispose low-temperature shift-conversion section 6b up to the region in which ammonia decomposition section 9 is disposed. The purpose of this is to prevent the heat emission to the outside of the apparatus.

### (Selective Oxidation)

The gas deprived of ammonia is conveyed to selective oxidation section 10 through ammonia decomposition section 9 and channel 95. Carbon monoxide gas remaining in the gas deprived of ammonia is removed in selective oxidation section 10, and thus hydrogen gas is obtained.

Selective oxidation section 10 is provided next to and along vaporization flow channel 8. Thus, selective oxidation section 10 is designed to be easily cooled. Since a selective oxidation reaction is an exothermic reaction, heat caused by a selective oxidation reaction is efficiently absorbed by vaporization flow channel 8, and the selective oxidation reaction is thus facilitated, and further, the reaction temperature is controlled at an optimum temperature.

In the above-mentioned manner, hydrogen gas is obtained. The obtained hydrogen gas is supplied to a fuel cell stack through a pipe (not illustrated). Thus, the fuel cell system including the fuel processing apparatus and the fuel cell stack is configured.

### 3. Function and Disposition of Functional Parts of Fuel Processing Apparatus

In the following, the function and the disposition of the functional parts of fuel processing apparatus 1 are described in detail.

### (Combustion Section)

Combustion section 2 supplies heat to the entire fuel processing apparatus 1 by operating burner 23 as a heat source of fuel processing apparatus 1.

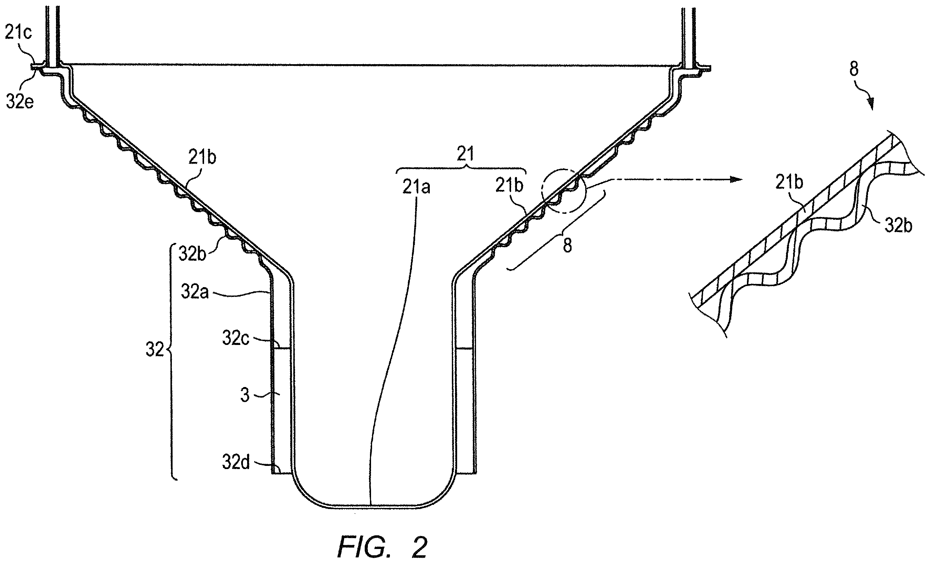

Combustion section 2 includes combustion section cylinder 22 (reference numeral is not shown in the drawing), first cylinder 21 (see FIG. 2) provided at an outer periphery of combustion section cylinder 22, and lid section 24 having burner 23 provided at an upper part of combustion section cylinder 22.

Combustion section cylinder 22 includes combustion section cylinder main body 22a and funnel-shaped tilted part 22b having a diameter widening toward the end from an upper opening of combustion section cylinder main body 22a. First cylinder 21 includes bottomed first cylinder main body 21a, which is provided at the outer circumference of combustion section cylinder main body 22a, and funnel-shaped (cone-shaped) first tilted section 21b having a diameter widening from the opening of first cylinder main body 21a toward the outermost periphery of fuel processing apparatus 1. Combustion section 2 is disposed in bottomed first cylinder main body 21a.

The upper ends of first cylinder 21 and combustion section cylinder 22 are joined by vacuum welding, for example.

The space between first cylinder 21 and combustion section cylinder 22 defines combustion exhaust gas path 25.

### (Desulfurization Section)

Desulfurization section 5 removes a sulfur component from hydrocarbon gas (source gas) such as city gas supplied to fuel processing apparatus 1. Desulfurization section 5 is filled with a (hydro) desulfurization catalyst. As the (hydro) desulfurization catalyst, various desulfurization catalysts can be used without any specific limit. As the desulfurization catalyst, a copper-based catalyst may be used, for example.

Desulfurization section 5 is disposed between bottomed fourth cylinder 41 and fifth cylinder 51. Bottomed fourth cylinder 41 is disposed at an outer periphery of third cylinder main body 31a. Heat insulation material 4 is provided between fourth cylinder 41 and third cylinder main body 31a. Fifth cylinder 51 is disposed at an outer periphery of fourth cylinder 41.

The walls configuring the upper and lower ends of desulfurization section 5 are each composed of a stainless-steel plate or the like having a main surface provided with a through hole so that gas can be flowed therethrough. Each stainless-steel plate is joined by welding or the like.

Bottom section 53 (the reference numeral is not illustrated) includes tabular disc-shaped bottom section main body 53a and bottomed cylinder 53b. Bottomed cylinder 53b is disposed as a cavity at the center portion of bottom section main body 53a, in such a manner as to surround the outer periphery of the bottom section of fourth cylinder 41. Desulfurization channel 55 in communication with desulfurization section 5 is defined between fourth cylinder 41 and cylinder 53b.

### (Vaporization Flow Channel and Reforming Section)

Vaporization flow channel 8 generates a mixed gas by mixing the source gas desulfurized by desulfurization section 5 and steam obtained by vaporizing the reforming water. Reforming section 3 is in communication with vaporization flow channel 8, and generates hydrogen-containing gas containing hydrogen as a main component from the mixed gas generated at vaporization flow channel 8.

When the source gas is a natural gas having methane as the main component, steam-methane reforming reaction occurs at reforming section 3 under the heat (of approximately 600°C, for example) by combustion section 2. Subsequently, methane and steam are reformed to gas containing hydrogen, carbon monoxide, and carbon dioxide.

CH₄ + H₂O → CO + 3H₂ ... [Formula 1]

CH₄ + 2H₂O → CO₂ + 4H₂ ... [Formula 2]

Reforming section 3 is filled with a reformer catalyst. The reformer catalyst is not limited and various reformer catalysts may be used. Reforming section 3 is filled with a reformer catalyst so that gas can pass through reforming section 3. For example, reforming section 3 is filled with ceramic porous granular material carrying reformer catalyst such as ruthenium, nickel, platinum and others.

As the reformer catalyst, it is preferable to use platinum catalyst in terms of a viewpoint for not generating gas that affects components or catalysts of the fuel cell at the time of reforming. However, in order to suppress the cost of fuel processing apparatus 1, it is preferable to use an inexpensive nickel (Ni) catalyst than an expensive platinum catalyst in order to suppress the cost for fuel processing apparatus 1.

As the reformer catalyst, using nickel (Ni) catalyst instead of platinum catalyst reduces the cost for the apparatus. However, since ammonia gas may be generated when reforming the source gas into hydrogen gas, ammonia gas may be present in the hydrogen gas, which is problematic. When ammonia gas is present in hydrogen gas, it is likely to degrade components of the fuel cell and to reduce the catalytic activity. Furthermore, when the fuel cell is used in a household cogeneration system, the odor of ammonia gas may be unpleasant to users. However, according to fuel processing apparatus 1 according to the embodiment, even when the nickel catalyst is used as the reformer catalyst, ammonia gas generated can be decomposed by providing ammonia decomposition section 9. Accordingly, the problem caused by ammonia gas is solved, and the cost for the entire fuel processing apparatus 1 is reduced.

Vaporization flow channel 8 includes first cylinder 21 (see FIG. 2) and second cylinder 32 disposed at the outer periphery of first cylinder 21. FIG. 2 illustrates first cylinder 21 and second cylinder 32. Second cylinder 32 includes second cylinder main body 32a provided at an outer periphery of first cylinder main body 21a and wavy tilted section 32b having a diameter widening from an upper opening of second cylinder main body 32a toward the outermost circumference of fuel processing apparatus 1.

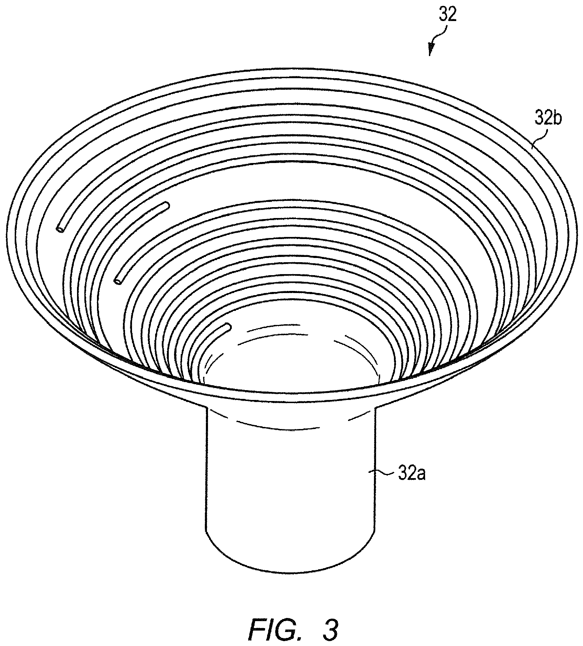

FIG. 3 illustrates second cylinder 32. Wavy tilted section 32b is provided with a spiral channel as illustrated in FIG. 3. That is, wavy tilted section 32b forms a spiral channel on the tilted surface of the funnel-shaped tilted part.

As illustrated in FIG. 2, upper end 32e of second cylinder 32 and upper end 21c of first cylinder 21 are joined together. In addition, the projecting parts of first tilted section 21b and wavy tilted section 32b are joined together with no gap therebetween. The joining may be performed by vacuum welding, for example. The projecting parts of first tilted section 21b and wavy tilted section 32b are joined together, whereby a gap between first cylinder 21 and second cylinder 32 defines vaporization flow channel 8.

At the upper end surface and the lower end surface of reforming section 3 provided between second cylinder 32 and first cylinder 21, stainless-steel plates 32c and 32d each having a main surface provided with a through hole so that gas can be passed therethrough are disposed. Stainless-steel plates 32c and 32d are joined together by welding or the like.

In the above-described manner, reforming section 3 in communication with vaporization flow channel 8 and capable of housing a reformer catalyst is formed in a space between first cylinder main body 21a and second cylinder main body 32a.

Upper end 32e of second cylinder 32 and upper end 21c of first cylinder 21 are joined together, the structure in which stainless-steel plate 32c is joined to the upper end of reforming section 3 is inverted, and reforming section 3 is filled with catalyst. Thereafter, by joining stainless-steel plate 32d, a structure in which reforming section 3 is filled with catalyst can be easily manufactured. The same procedure is preferably used to fill catalyst in the other functional parts.

Vaporization flow channel 8 of fuel processing apparatus 1 is a spiral channel defined on the tilted surface of the funnel-shaped tilted part, and thus the length of vaporization flow channel 8 can be made longer than those of conventional fuel processing apparatus. By increasing the length of vaporization flow channel 8, reforming water is more likely to be evaporated, and the reforming water will be mixed more easily with the source gas.

Further, high-temperature shift-conversion section 6a and selective oxidation section 10 disposed next to vaporization flow channel 8 are easily cooled by vaporization flow channel 8. An exothermic reaction occurs in each of high-temperature shift-conversion section 6a and selective oxidation section 10. When the heat caused by the reaction is efficiently absorbed by vaporization flow channel 8, the catalyst reaction is efficiently progressed. In addition, the reaction temperature is controlled at an optimum temperature.

By welding the projecting parts of first tilted section 21b and wavy tilted section 32b, a shortcut of vaporization flow channel 8 by reforming water can be prevented, and thus abrupt change in the temperature in vaporization flow channel 8 can be prevented.

In a conventional fuel processing apparatus, when defining the vaporization flow channel, an intermediate cylinder (wire member or the like defining the channel) inserted between the inner cylinder and the outer cylinder has to be closely attached to the outer cylinder and the inner cylinder. To closely attach the intermediate cylinder to the outer cylinder and the inner cylinder, it has been necessary to increase the size of the inner cylinder or reduce the size of the outer cylinder. In contrast, in the embodiment, without increasing or decreasing the cylinder size, vaporization flow channel 8 can be easily formed.

The tilt angle θ (see FIG. 1) of first tilted section 21b and wavy tilted section 32b is approximately 15 degrees to approximately 75 degrees, preferably 30 degrees to 50 degrees.

Fuel processing apparatus 1 is composed of first tilted section 21b and wavy tilted section 32b, and is provided with tilted vaporization flow channel 8, and thus, it is possible to set the aspect ratio of the entire apparatus (Y/X; see FIG. 1) at an aspect ratio in a range of approximately 0.6 to approximately 0.9, preferably approximately 0.65 to approximately 0.75. A conventional fuel processing apparatus has an aspect ratio of approximately 1.6 to approximately 3.0. Therefore, fuel processing apparatus 1 has high installation stability when in use. In general, the aspect ratio that makes fuel processing apparatus 1 easy to handle is approximately 1. Accordingly, it is preferable to adjust the tilt angle θ between first tilted section 21b and wavy tilted section 32b such that the aspect ratio becomes closer to 1. Note that, the aspect ratio (Y/X) of fuel processing apparatus 1 is 235/330=0.71.

### (High-temperature Shift-conversion section)

High-temperature shift-conversion section 6a reduces the carbon monoxide concentration in the hydrogen-containing gas generated by the reforming by reforming section 3. Reforming section 3 is filled with high-temperature catalyst. As a high-temperature shift-conversion catalyst, a copper-based catalyst may be used, for example.

More specifically, in high-temperature shift-conversion section 6a, as illustrated in the following formula, carbon dioxide and hydrogen are generated through the reaction between carbon monoxide and steam in the hydrogen-containing gas.

CO + H₂O → CO₂ + H₂ ... [Formula 3]

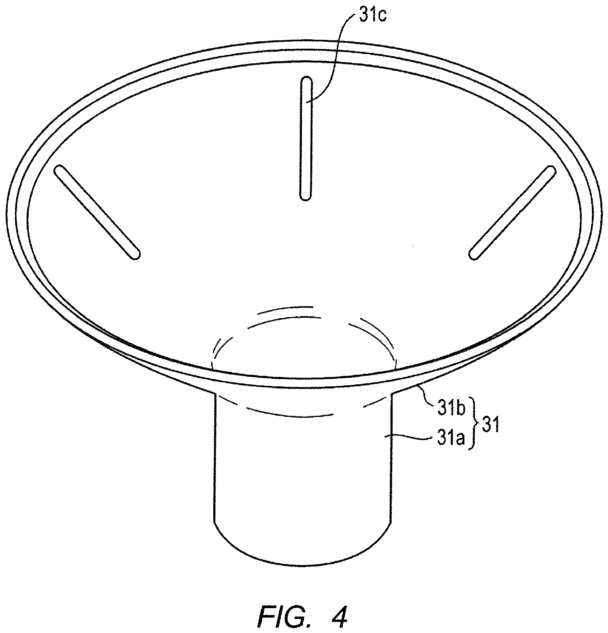

High-temperature shift-conversion section 6a is provided in a space defined between second cylinder 32 and third cylinder 31 disposed at the outer periphery of second cylinder 32. Third cylinder 31 includes a bottomed third cylinder main body 31a provided at an outer periphery of second cylinder main body 32a and funnel-shaped second tilted section 31b having a diameter widening from the opening of third cylinder main body 31a toward the end (see FIG. 4). Channel 35 in communication with reforming section 3 is defined between second cylinder main body 32a and third cylinder main body 31a, and a high-temperature channel is defined between spiral wavy tilted section 32b and second inclined section 31b.

As illustrated in FIG. 4, channel 31c is defined at a part of second inclined section 31b. As illustrated in FIG. 5, the gas having flowed through flow channel 31c flows through flow channel 31d and high-temperature shift-conversion section 6a, and is directed to low-temperature shift-conversion section 6b through turn-back section 31e. High-temperature shift-conversion section 6a is provided along a part of vaporization flow channel 8.

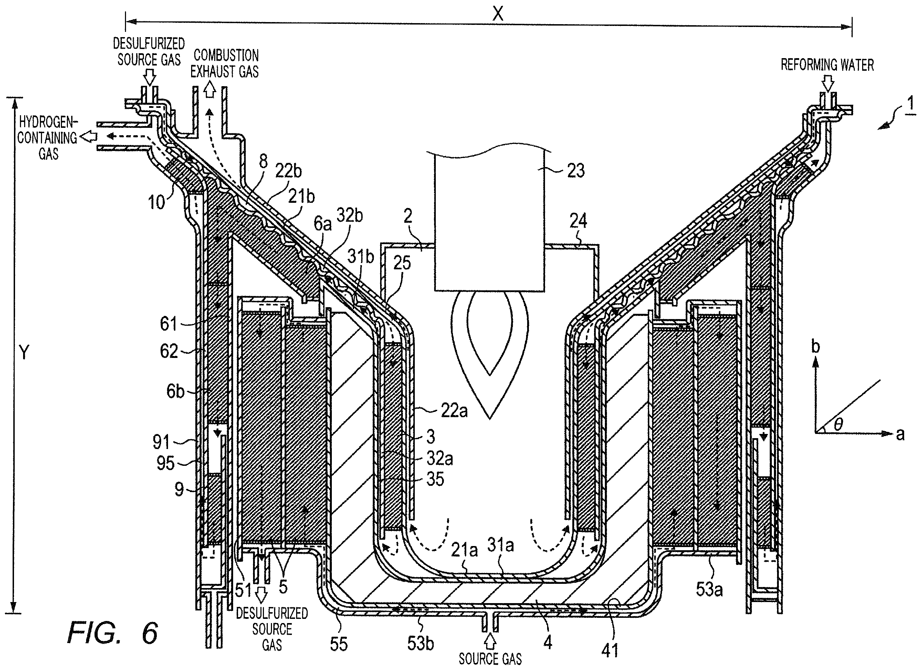

In addition, as with the fuel processing apparatus illustrated in FIG. 6, high-temperature shift-conversion section 6a and low-temperature shift-conversion section 6b may be continuously provided. That is, the high-temperature catalyst and the low-temperature catalyst may be continuously disposed with no void therebetween. When the high-temperature catalyst and the low-temperature catalyst are continuously disposed, 31b' as illustrated in FIG. 5, which is a part of second inclined section, may be omitted. In this manner, channel 31d and turn-back section 31e can be omitted, and a simplified configuration can be achieved.

In the fuel processing apparatus illustrated in FIG. 6, gas in channel 31c advances to high-temperature shift-conversion section 6a along second inclined section 31b from the lower side in the drawing. The gas advanced to high-temperature shift-conversion section 6a passes through high-temperature shift-conversion section 6a, and advances to low-temperature shift-conversion section 6b continuously disposed with high-temperature shift-conversion section 6a.

### (Low-temperature Shift-conversion section and Ammonia Decomposition Section)

Low-temperature shift-conversion section 6b includes a low-temperature shift-conversion catalyst as the exothermic catalyst. Ammonia decomposition section 9 includes an ammonia decomposing catalyst as the exothermic catalyst. As the low-temperature shift-conversion catalyst and the ammonia decomposing catalyst, a copper-based catalyst may be used.

Low-temperature shift-conversion section 6b is formed between sixth cylinder 61 and seventh cylinder 62. Sixth cylinder 61 is provided at an outer periphery of fifth cylinder 51, and the upper end of sixth cylinder 61 is in contact with second tilted section 31b. Seventh cylinder 62 is provided at an outer periphery of sixth cylinder 61, and the upper end of sixth cylinder 61 is in contact with second tilted section 31b.

At portions corresponding to the upper end and the lower end of low-temperature shift-conversion section 6b, stainless steel plates each having a main surface provided with a through hole that allows air to pass therethrough are joined by welding.

Ammonia decomposition section 9 is also formed between sixth cylinder 61 and seventh cylinder 62. In addition, ammonia decomposition section 9 is provided on a downstream side of low-temperature shift-conversion section 6b with respect to the direction of the gas flow.

### (Selective Oxidation Section)

Selective oxidation section 10 removes carbon monoxide remaining in the gas shift-converted by high-temperature shift-conversion section 6a and low-temperature shift-conversion section 6b. Selective oxidation section 10 is filled with ruthenium catalyst, for example. More specifically, in selective oxidation section 10, carbon monoxide remaining in the gas shift-converted at a reaction temperature of approximately 100°C to 200°C is oxidized by the catalytic action of ruthenium or others with oxygen in added air.

Selective oxidation section 10 is provided between seventh cylinder 62 and eighth cylinder 91 provided at an outer periphery of seventh cylinder 62, along vaporization flow channel 8. In addition, selective oxidation section 10 is provided outside of low-temperature shift-conversion section 6b.

Selective oxidation section 10 is in communication with ammonia decomposition section 9 through channel 95 provided between seventh cylinder 62 and eighth cylinder 91.

### 4. Performance of Fuel Processing Apparatus 1

According to fuel processing apparatus 1, by disposing high-temperature shift-conversion section 6a at a position near desulfurization section 5, desulfurization performance can be enhanced. While desulfurization section 5 efficiently functions at a temperature in the same temperature range (250°C to 300°C) as that of high-temperature shift-conversion section 6a, desulfurization section 5 itself does not generate heat. For this reason, by disposing desulfurization section 5 at a position near high-temperature shift-conversion section 6a that causes an exothermic reaction, the temperature of desulfurization section 5 can be maintained at a high temperature. In addition, by disposing vaporization flow channel 8 at a position above high-temperature shift-conversion section 6a, the heat generated by high-temperature shift-conversion section 6a can be absorbed by vaporization flow channel 8, the temperature of high-temperature shift-conversion section 6a can be maintained at an optimum temperature, and the reaction in high-temperature shift-conversion section 6a can be facilitated.

According to fuel processing apparatus 1, low-temperature shift-conversion section 6b and ammonia decomposition section 9 having an exothermic catalyst are disposed outside of desulfurization section 5. Therefore, even when the amount of the heat insulation material provided at the outer periphery of fuel processing apparatus 1 is reduced, the hydrodesulfurization catalyst housed in desulfurization section 5 is less likely to be affected by the external environment.

Furthermore, according to fuel processing apparatus 1, by improving reaction efficiency of the desulfurization catalyst, the amount of catalyst added can be reduced and thus the apparatus can be reduced in size and weight, as compared to a conventional apparatus. Furthermore, according to fuel processing apparatus 1 according to the embodiment, the activation efficiency of the reaction catalyst can be maintained at a constant value. Accordingly, it is possible to improve reliability of the apparatus.

According to fuel processing apparatus 1, during the operation, the temperature region of 600°C to 150°C is formed from combustion section 2 toward the outer periphery with combustion section 2 disposed at the center. Reforming section 3 is disposed in the temperature region of approximately 600°C, desulfurization section 5 is in the temperature region of approximately 250°C to 300°C, high-temperature shift-conversion section 6a is in the temperature region of approximately 300°C, low-temperature shift-conversion section 6b and ammonia decomposition section 9 are in the temperature region of 200°C, and selective oxidation section 10 is in the temperature region of 150°C. Therefore, since the sections are disposed in respective temperature regions suitable for the catalyst provided therein, the reaction efficiency of the catalyst is enhanced.

When the reforming section is exposed to the external environment, the heat of the reforming section is emitted out of the apparatus. In a conventional fuel processing apparatus, a thick heat insulation material has to be disposed at the outer periphery of the apparatus to prevent the emission of heat. In contrast, in fuel processing apparatus 1, ammonia decomposition section 9 and selective oxidation section 10 disposed on the outer periphery side of the apparatus bring about the heat insulating effect, because an exothermic reaction occurs at a low temperature in ammonia decomposition section 9 and selective oxidation section 10. That is, with fuel processing apparatus 1, it is possible to prevent heat dissipation and to reduce the thickness of the heat insulating material provided at an outer periphery of the apparatus as compared to the conventional apparatus, thereby achieving miniaturization of the apparatus.

In the conventional fuel processing apparatus, the reaction efficiency of the shift-converter catalyst is reduced due to variation in temperature in the shift-conversion section. In contrast, in fuel processing apparatus 1, the shift-conversion catalyst of the same amount as that of the shift-conversion catalyst added to the conventional shift-conversion section is separated into high-temperature shift-conversion section 6a and low-temperature shift-conversion section 6b, and thus the variation in temperature in the shift-conversion catalyst can be effectively prevented. In particular, by providing a high-temperature shift-conversion catalyst in high-temperature shift-conversion section 6a provided along vaporization flow channel 8, and providing a low-temperature shift-conversion catalyst in low-temperature shift-conversion section 6b, the variation in temperature can be effectively prevented. Since the heat generated by the catalytic reaction at high-temperature shift-conversion section 6a is efficiently absorbed in vaporization flow channel 8, the catalytic reaction proceeds more efficiently. By improving the reaction efficiency of the catalyst, the amount of added catalyst can be reduced.

For example, a fuel cell system including fuel processing apparatus 1 described in the embodiment as a part can be manufactured.

According to fuel processing apparatus 1, by supplying source gas from bottom section 53 disposed on the lower side of combustion section 2, the source gas is preheated by the heat from combustion section 2. To obtain the preheat effect by combustion section 2 more effectively, a source gas preheating section may be provided at a center portion of cavity 53b of bottom section 53. One reason of this is that, by preheating the source gas, the reaction with catalyst in desulfurization section 5 is efficiently progressed. Another reason is that, by forming the source gas preheating section, the emission of heat from fuel processing apparatus 1 can be prevented.

Needless to say, the present invention includes various embodiments that have not been described herein. Accordingly, the technical scope of the present invention is determined merely by the features of the invention according to the appended claims reasonably arrived based on the description above.

### Industrial Applicability

According to the present invention, a fuel processing apparatus with a catalyst having high reaction efficiency is provided. Further, according to the present invention, a fuel processing apparatus which is less affected by a temperature of an external environment is provided.

### Reference Signs List

1 Fuel processing apparatus
2 Combustion section
3 Reforming section
4 Heat insulation material
5 Desulfurization section
6a High-temperature shift-conversion section
6b Low-temperature shift-conversion section
8 Vaporization flow channel
9 Ammonia decomposition section
10 Selective oxidation section
21 First cylinder
21a First cylinder main body
21b First tilted section
21c Upper end
22a Combustion section cylinder main body
22b Tilted section
23 Burner
24 Lid section
25 Combustion exhaust gas path
31 Third cylinder
31a Third cylinder main body
31b Second tilted section
31c Channel
32 Second cylinder
32a Second cylinder main body
32b Wavy tilted section
32c Stainless-steel plate
32d Stainless-steel plate
32e Upper end
41 Fourth cylinder
51 Fifth cylinder
53a Bottom section main body
53b Cavity
55 Desulfurization channel
61 Sixth cylinder
62 Seventh cylinder
91 Eighth cylinder
95 Channel
100 Fuel processing apparatus
102 Combustion section
103 Reforming section
105 Desulfurization section
106 Shift-conversion section
108 Vaporization flow channel
110 Selective oxidation section

## Claims

1. A fuel processing apparatus (1) that generates a fuel to be supplied to a fuel cell system, the apparatus comprising:
a combustion section (2) surrounded by a combustion section cylinder (22), a first cylinder (21), a second cylinder (32), a third cylinder (31) comprising a bottomed third cylinder main body (31a), a bottomed fourth cylinder (41) disposed at an outer periphery of periphery of the third cylinder main body (31a), a fifth cylinder (51) disposed at an outer periphery of the fourth cylinder (41), a sixth cylinder (61), and a seventh cylinder (62) which define spaces concentric about the combustion section (2), and a bottomed cylinder (53b) disposed so as to surround an outer periphery of a bottom section of the fourth cylinder (41);
a vaporization flow channel (8) including the first cylinder (21) and the second cylinder (32), wherein the second cylinder (32) is disposed at the outer periphery of the first cylinder (21) and wherein the vaporization flow channel (8) is adapted to heat desulfurized source gas and reforming water to obtain mixed gas, wherein the first cylinder (21) includes a bottomed first cylinder main body (21a) and a cone-shaped first tilted section (21b) having a diameter widening from an opening of the first cylinder main body (21a) toward the outermost periphery of the fuel processing apparatus (1) and the combustion section cylinder (22) includes a combustion section cylinder main body (22a) and wherein the second cylinder (32) includes a second cylinder main body (32a) provided at an outer periphery of the first cylinder main body (21a), a funnel-shaped tilted part (22b) having a diameter widening toward the end from an upper opening of the combustion section cylinder main body (22a), and
a wavy forming tilted section (32b) having a diameter widening from an upper opening of the second cylinder main body (32a) toward an outermost circumference of the fuel processing apparatus (1), wherein projecting parts of the first tilted section (21b) and the wavy tilted section (32b) are joined together with no gap therebetween, wherein the first cylinder main body (21a) is provided at an outer circumference of the combustion section cylinder main body (22a) wherein the vaporization flow channel (8) is defined by a gap between the first cylinder (21) and the second cylinder (32) as a spiral channel defined on the tilted surface of the funnel-shaped tilted part (22b);
wherein the combustion section (2) is disposed in the bottomed first cylinder main body (21a) and including the combustion section cylinder (22) and the first cylinder (21) and the combustion section (2) having a heat source (23), wherein the first cylinder (21) is provided at an outer periphery of the combustion section cylinder (22), an upper end of the first cylinder (21) is joined to an upper end of the combustion section cylinder (22), and the heat source (23) is provided at an upper part of the combustion section cylinder (22);
a reforming section (3) disposed so as to surround the combustion section (2) and formed in a space between the first cylinder main body (21a) and the second cylinder main body (32a), wherein the reforming section (3) is filled with a reformer catalyst and adapted to generate hydrogen-containing gas containing hydrogen as a main component from the mixed gas;
a desulfurization section (5) for removing a sulfur component from source gas, the desulfurization section (5) being disposed between the fourth cylinder (41) and the fifth cylinder (51) so as to surround the reforming section (3) and to be in communication with the reforming section (3) through the vaporization flow channel (8), wherein the vaporization flow channel (8) is obliquely tilted from an upper end of the reforming section (3) toward outside, wherein a desulfurization channel (55) in communication with the desulfurization section (5) is defined between the fourth cylinder (41) and the bottomed cylinder (53b) disposed so as to surround the outer periphery of a bottom section of the fourth cylinder (41);
a high-temperature shift-conversion section (6a) disposed above the desulfurization section (5) along the vaporization flow channel (8) and provided in a space between the second cylinder (32) and the third cylinder (31), wherein the third cylinder (31) is disposed at the outer periphery of the second cylinder (32) and wherein the high-temperature shift-conversion section (6a) is adapted to reduce a carbon monoxide concentration in the hydrogen-containing gas;
a low-temperature shift-conversion section (6b) so disposed as to surround the desulfurization section (5) and formed between the sixth cylinder (61) and the seventh cylinder (62) and including a low-temperature shift conversion catalyst, wherein the sixth cylinder (61) is provided at an outer periphery of the fifth cylinder (51) and the seventh cylinder (62) is provided at an outer periphery of the sixth cylinder (61), the lower temperature shift-conversion section (6b) including an exothermic catalyst that further reduces the carbon monoxide concentration of the hydrogen-containing gas whose carbon monoxide concentration is reduced, and the low-temperature shift-conversion section (6b) being in communication with the reforming section (8) through the high-temperature shift-conversion section (6a);
an ammonia decomposition section (9) comprising an ammonia decomposing catalyst and disposed below the low-temperature shift-conversion section (6b) and between the sixth cylinder (61) and the seventh cylinder (62) and on a downstream side of the low-temperature shift-conversion section (6b);
a selective oxidation section (10) provided along the vaporization flow channel (8) and outside of the low-temperature shift-conversion section (6b), the selective oxidation section (9) and the low-temperature shift-conversion section (6b) being in communication with each other through the ammonia decomposition section (9), the selective oxidation section (10) being filled with a catalyst removing carbon monoxide remaining in the gas shift-converted by the high-temperature shift-conversion section (6a) and the low-temperature shift-conversion section (6b),
**characterized in that**
the vaporization flow channel (8) is in communication with the desulfurization section (5) through a pipe and the reforming section (3) is in communication with the desulfurization section (5) through the vaporization flow channel (8), and that the vaporization flow channel (8) passes through a region above the desulfurization section (5),
the reforming section (3) and the low-temperature shift-conversion section (6b) are in communication with each other through the high-temperature shift-conversion section (6a), and the high-temperature shift-conversion section (6a) is provided above the desulfurization section (5) along the vaporization flow channel (8), and
the reforming section (3), the desulfurization section (8), and the low-temperature shift-conversion section (6b) surround the combustion section (2), and the reforming section (3), the desulfurization section (8), and the low-temperature shift-conversion section (6b) are provided in order in concentric circles from the combustion section (2) toward outside.

## Patentansprüche

1. Brennstoffbehandlungsvorrichtung (1), die einen Brennstoff erzeugt, der einem Brennstoffzellensystem zugeführt werden soll, wobei die Vorrichtung Folgendes umfasst:
einen Verbrennungsabschnitt (2), der von einem Verbrennungsabschnittszylinder (22) umgeben ist, einen ersten Zylinder (21), einen zweiten Zylinder (32), einen dritten Zylinder (31), der einen mit einem Boden versehenen dritten Zylinderhauptkörper (31a) umfasst, einen mit einem Boden versehenen vierten Zylinder (41), der an einem äußeren Umfang eines Umfangs des dritten Zylinderhauptkörpers (31a) angeordnet ist, einen fünften Zylinder (51), der an einem äußeren Umfang des vierten Zylinders (41) angeordnet ist, einen sechsten Zylinder (61) und einen siebten Zylinder (62), die konzentrische Räume um den Verbrennungsabschnitt (2) definieren, und einen mit einem Boden versehenen Zylinder (53b), der so angeordnet ist, dass er einen äußeren Umfang eines Bodenabschnitts des vierten Zylinders (41) umgibt;
einen Verdampfungsströmungskanal (8), der den ersten Zylinder (21) und den zweiten Zylinder (32) beinhaltet, wobei der zweite Zylinder (32) an dem äußeren Umfang des ersten Zylinders (21) angeordnet ist und wobei der Verdampfungsströmungskanal (8) angepasst ist, um entschwefeltes Ausgangsgas und Reformierungswasser zu erhitzen, um ein gemischtes Gas zu erhalten, wobei der erste Zylinder (21) einen mit einem Boden versehenen ersten Zylinderhauptkörper (21a) und einen kegelförmigen ersten geneigten Abschnitt (21b) umfasst, der einen Durchmesser aufweist, der sich von einer Öffnung des ersten Zylinderhauptkörpers (21a) zu dem äußersten Umfang der Brennstoffbehandlungsvorrichtung (1) erweitert, und der Verbrennungsabschnittszylinder (22) einen Verbrennungsabschnitts-Zylinderhauptkörper (22a) beinhaltet und wobei der zweite Zylinder (32) einen zweiten Zylinderhauptkörper (32a) beinhaltet, der an einem äußeren Umfang des ersten Zylinderhauptkörpers (21a) bereitgestellt ist, ein trichterförmiges geneigtes Teil (22b) mit einem Durchmesser, der sich zu dem Ende von einer oberen Öffnung des Verbrennungsabschnitts-Zylinderhauptkörpers (22a) erweitert, und
einen wellenförmig gebildeten geneigten Abschnitt (32b) mit einem Durchmesser, der sich von einer oberen Öffnung des zweiten Zylinderhauptkörpers (32a) zu einem äußersten Umfang der Brennstoffbehandlungsvorrichtung (1) erweitert, wobei vorstehende Teile des ersten geneigten Abschnitts (21b) und des wellenförmigen geneigten Abschnitts (32b) ohne einen Spalt dazwischen miteinander verbunden werden, wobei der erste Zylinderhauptkörper (21a) an einem äußeren Umfang des Verbrennungsabschnitts-Zylinderhauptkörpers (22a) bereitgestellt ist, wobei der Verdampfungsströmungskanal (8) durch einen Spalt zwischen dem ersten Zylinder (21) und dem zweiten Zylinder (32) als ein Spiralkanal definiert ist, der auf der geneigten Oberfläche des trichterförmigen geneigten Teils (22b) definiert ist;
wobei der Verbrennungsabschnitt (2) in dem mit einem Boden versehenen ersten Zylinderhauptkörper (21a) angeordnet ist und den Verbrennungsabschnittszylinder (22) beinhaltet und der erste Zylinder (21) und der Verbrennungsabschnitt (2) eine Wärmequelle (23) aufweisen, wobei der erste Zylinder (21) an einem äußeren Umfang des Verbrennungsabschnittszylinders (22) bereitgestellt ist, ein oberes Ende des ersten Zylinders (21) mit einem oberen Ende des Verbrennungsabschnittszylinders (22) verbunden ist und die Wärmequelle (23) an einem oberen Teil des Verbrennungsabschnittszylinders (22) bereitgestellt ist;
einen Reformierungsabschnitt (3), der so angeordnet ist, dass er den Verbrennungsabschnitt (2) umgibt und in einem Raum zwischen dem ersten Zylinderhauptkörper (21a) und dem zweiten Zylinderhauptkörper (32a) gebildet ist, wobei der Reformierungsabschnitt (3) mit einem Reformerkatalysator gefüllt und angepasst ist, um Wasserstoff enthaltendes Gas zu erzeugen, das Wasserstoff als einen Hauptbestandteil aus dem gemischten Gas enthält;
einen Entschwefelungsabschnitt (5) zum Entfernen einer Schwefelkomponente aus einem Ausgangsgas, wobei der Entschwefelungsabschnitt (5) zwischen dem vierten Zylinder (41) und dem fünften Zylinder (51) so angeordnet ist, dass er den Reformierungsabschnitt (3) umgibt und durch den Verdampfungsströmungskanal (8) in Kommunikation mit dem Reformierungsabschnitt (3) ist, wobei der Verdampfungsströmungskanal (8) schräg von einem oberen Ende des Reformierungsabschnitts (3) nach außen geneigt ist, wobei ein Entschwefelungskanal (55) in Kommunikation mit dem Entschwefelungsabschnitt (5) zwischen dem vierten Zylinder (41) und dem mit einem Boden versehenen Zylinder (53b) definiert ist, der so angeordnet ist, dass er den äußeren Umfang eines Bodenabschnitts des vierten Zylinders (41) umgibt;
einen Hochtemperatur-Shift-Konvertierungsabschnitt (6a), der über dem Entschwefelungsabschnitt (5) entlang des Verdampfungsströmungskanals (8) angeordnet ist und in einem Raum zwischen dem zweiten Zylinder (32) und dem dritten Zylinder (31) bereitgestellt ist, wobei der dritte Zylinder (31) an dem äußeren Umfang des zweiten Zylinders (32) angeordnet ist und wobei der Hochtemperatur-Shift-Konvertierungsabschnitt (6a) angepasst ist, um eine Kohlenmonoxidkonzentration in dem Wasserstoff enthaltenden Gas zu reduzieren;
einen Tieftemperatur-Shift-Konvertierungsabschnitt (6b), der so angeordnet ist, dass er den Entschwefelungsabschnitt (5) umgibt und zwischen dem sechsten Zylinder (61) und dem siebten Zylinder (62) gebildet ist und einen Tieftemperatur-Shift-Konvertierungskatalysator beinhaltet, wobei der sechste Zylinder (61) an einem äußeren Umfang des fünften Zylinders (51) bereitgestellt ist und der siebte Zylinder (62) an einem äußeren Umfang des sechsten Zylinders (61) bereitgestellt ist, der Tieftemperatur-Shift-Konvertierungsabschnitt (6b) einen exothermen Katalysator beinhaltet, der die Kohlenmonoxidkonzentration des Wasserstoff enthaltenden Gases weiter reduziert, dessen Kohlenomonoxidkonzentration reduziert ist, und der Tieftemperatur-Shift-Konvertierungsabschnitt (6b) durch den Hochtemperatur-Shift-Konvertierungsabschnitt (6a) in Kommunikation mit dem Reformierungsabschnitt (8) ist;
einen Ammoniakzersetzungsabschnitt (9), der einen ammoniakzersetzenden Katalysator umfasst und unter dem Tieftemperatur-Shift-Konvertierungsabschnitt (6b) und zwischen dem sechsten Zylinder (61) und dem siebten Zylinder (62) und an einer stromabwärtigen Seite des Tieftemperatur-Shift-Konvertierungsabschnitts (6b) angeordnet ist;
einen selektiven Oxidationsabschnitt (10), der entlang des Verdampfungsströmungskanals (8) und außerhalb des Tieftemperatur-Shift-Konvertierungsabschnitts (6b) bereitgestellt ist, wobei der selektive Oxidationsabschnitt (9) und der Tieftemperatur-Shift-Konvertierungsabschnitt (6b) durch den Ammoniakzersetzungsabschnitt (9) in Kommunikation miteinander sind, wobei der selektive Oxidationsabschnitt (10) mit einem Katalysator gefüllt ist, der Kohlenmonoxid entfernt, das in dem Gas verblieben ist, das durch den Hochtemperatur-Shift-Konvertierungsabschnitt (6a) und den Tieftemperatur-Shift-Konvertierungsabschnitt (6b) einer Konvertierung unterzogen wird,
**dadurch gekennzeichnet, dass**
der Verdampfungsströmungskanal (8) durch ein Rohr in Kommunikation mit dem Entschwefelungsabschnitt (5) ist und der Reformierungsabschnitt (3) durch den Verdampfungsströmungskanal (8) in Kommunikation mit dem Entschwefelungsabschnitt (5) ist und dass der Verdampfungsströmungskanal (8) durch einen Bereich über dem Entschwefelungsabschnitt (5) verläuft,
der Reformierungsabschnitt (3) und der Tieftemperatur-Shift-Konvertierungsabschnitt (6b) durch den Hochtemperatur-Shift-Konvertierungsabschnitt (6a) in Kommunikation miteinander sind und der Hochtemperatur-Shift-Konvertierungsabschnitt (6a) über dem Entschwefelungsabschnitt (5) entlang des Verdampfungsströmungskanals (8) bereitgestellt ist und
der Reformierungsabschnitt (3), der Entschwefelungsabschnitt (8) und der Tieftemperatur-Shift-Konvertierungsabschnitt (6b) den Verbrennungsabschnitt (2) umgeben und der Reformierungsabschnitt (3), der Entschwefelungsabschnitt (8) und der Tieftemperatur-Shift-Konvertierungsabschnitt (6b) der Reihe nach in konzentrischen Kreisen von dem Verbrennungsabschnitt (2) nach außen bereitgestellt sind.

## Revendications

1. Dispositif de traitement de combustible (1) qui génère un combustible devant être fourni à un système de pile à combustible, le dispositif comprenant :
une section de combustion (2) entourée par un cylindre à section de combustion (22), un premier cylindre (21), un deuxième cylindre (32), un troisième cylindre (31) comprenant un corps principal de troisième cylindre avec fond (31a), un quatrième cylindre avec fond (41) disposé à la périphérie externe de la périphérie du corps principal de troisième cylindre (31a), un cinquième cylindre (51) disposé à la périphérie externe du quatrième cylindre (41), un sixième cylindre (61) et un septième cylindre (62) qui définissent des espaces concentriques autour de la section de combustion (2) et un cylindre avec fond (53b) disposé de manière à entourer une périphérie externe d'une section de fond du quatrième cylindre (41) ;
un canal d'écoulement d'évaporation (8) comprenant le premier cylindre (21) et le deuxième cylindre (32), le deuxième cylindre (32) étant disposé à la périphérie externe du premier cylindre (21) et le canal d'écoulement d'évaporation (8) étant conçu pour chauffer le gaz source désulfurisé et l'eau de reformage pour obtenir un gaz mixte, le premier cylindre (21) comprenant un corps principal de premier cylindre avec fond (21a) et une première section inclinée conique (21b) présentant un diamètre s'élargissant d'une ouverture du corps principal de premier cylindre (21a) à la périphérie la plus externe du dispositif de traitement de combustible (1) et le cylindre de section à combustion (22) comprenant un corps principal de cylindre à section de combustion (22a) et le deuxième cylindre (32) comprenant un corps principal de deuxième cylindre (32a) disposé à la périphérie externe du corps principal de premier cylindre (21a), une partie inclinée en forme d'entonnoir (22b) présentant un diamètre s'élargissant vers l'extrémité depuis une ouverture supérieure du corps principal de cylindre à section de combustion (22a), et
une section inclinée de forme ondulée (32b) présentant un diamètre s'élargissant d'une ouverture supérieure du corps principal de deuxième cylindre (32a) vers la circonférence la plus externe du dispositif de traitement de combustible (1), des parties saillantes de la première section inclinée (21b) et de la section inclinée ondulée (32b) étant assemblées sans espacement entre celles-ci, le corps principal de premier cylindre (21a) étant disposé à une circonférence externe du corps principal de cylindre à section de combustion (22a), le canal d'écoulement d'évaporation (8) étant défini par un espacement entre le premier cylindre (21) et le deuxième cylindre (32) comme canal spiralé défini sur la surface inclinée de la partie inclinée en forme d'entonnoir (22b) ;
la section de combustion (2) étant disposée dans le corps principal de premier cylindre avec fond (21a) et comprenant le cylindre à section de combustion (22) et le premier cylindre (21) et la section de combustion (2) présentant une source thermique (23), le premier cylindre (21) étant disposé à la périphérie externe du cylindre à section de combustion (22), une extrémité supérieure du premier cylindre (21) étant reliée à une extrémité supérieure du cylindre à section de combustion (22), et la source thermique (23) étant disposée dans une partie supérieure du cylindre à section de combustion (22) ;
une section de reformage (3) disposée de manière à entourer la section de combustion (2) et formée dans un espace entre le corps principal de premier cylindre (21a) et le corps principal de deuxième cylindre (32a), la section de reformage (3) étant remplie d'un catalyseur de reformage et conçue pour générer un gaz contenant de l'hydrogène comme composant principal issu du gaz mixte ;
une section de désulfuration (5) destinée à retirer un composant de soufre d'un gaz source, la section de désulfuration (5) étant disposée entre le quatrième cylindre (41) et le cinquième cylindre (51) de manière à entourer la section de reformage (3) et à être en communication avec la section de reformage (3) par le biais du canal d'écoulement d'évaporation (8), le canal d'écoulement d'évaporation (8) étant incliné en oblique depuis une extrémité supérieure de la section de reformage (3) vers l'extérieur, un canal de désulfuration (55) en communication avec la section de désulfuration (5) étant défini entre le quatrième cylindre (41) et le cylindre avec fond (53b) disposé de manière à entourer la périphérie externe d'une section de fond du quatrième cylindre (41) ;
une section de conversion catalytique à température élevée (6a) disposée au-dessus de la section de désulfuration (5) le long du canal d'écoulement d'évaporation (8) et disposée dans un espace entre le deuxième cylindre (32) et le troisième cylindre (31), le troisième cylindre (31) étant disposé à la périphérie externe du deuxième cylindre (32) et la section de conversion catalytique à température élevée (6a) étant conçue pour réduire une concentration de monoxyde de carbone dans le gaz contenant l'hydrogène ;
une section de conversion catalytique à température basse (6b) disposée de manière à entourer la section de désulfuration (5) et formée entre le sixième cylindre (61) et le septième cylindre (62) et comprenant un catalyseur de conversion catalytique à température basse, le sixième cylindre (61) étant disposé à la périphérie externe du cinquième cylindre (51) et le septième cylindre (62) étant disposé à la périphérie externe du sixième cylindre (61), la section de conversion catalytique à température plus basse (6b) comprenant un catalyseur exothermique qui réduit encore la concentration en monoxyde de carbone du gaz contenant de l'hydrogène dont la concentration en monoxyde de carbone est réduite, et la section de conversion catalytique à température basse (6b) étant en communication avec la section de reformage (8) par le biais de la section de conversion catalytique à température élevée (6a) ;
une section de décomposition d'ammoniac (9) comprenant un catalyseur de décomposition d'ammoniac et disposée au-dessous de la section de conversion catalytique à température basse (6b) et entre le sixième cylindre (61) et le septième cylindre (62) et sur un côté aval de la section de conversion catalytique à température basse (6b) ;
une section d'oxydation sélective (10) disposée le long du canal d'écoulement d'évaporation (8) et à l'extérieur de la section de conversion catalytique à température basse (6b), la section d'oxydation sélective (9) et la section de conversion catalytique à température basse (6b) étant en communication l'une avec l'autre par le biais de la section de décomposition d'ammoniac (9), la section d'oxydation sélective (10) étant remplie d'un catalyseur retirant le monoxyde de carbone restant dans le gaz soumis à une conversion catalytique par la section de conversion catalytique à température élevée (6a) et la section de conversion catalytique à température basse (6b),
**caractérisé en ce que**
le canal d'écoulement d'évaporation (8) est en communication avec la section de désulfuration (5) par le biais d'un tuyau et la section de reformage (3) est en communication avec la section de désulfuration (5) par le biais du canal d'écoulement d'évaporation (8), et **en ce que** le canal d'écoulement d'évaporation (8) passe par une région au-dessus de la section de désulfuration (5),
la section de reformage (3) et la section de conversion catalytique à température basse (6b) sont en communication l'une avec l'autre par le biais de la section de conversion catalytique à température élevée (6a), et la section de conversion catalytique à température élevée (6a) est disposée au-dessus de la section de désulfuration (5) le long du canal d'écoulement d'évaporation (8), et
la section de reformage (3), la section de désulfuration (8) et la section de conversion catalytique à température basse (6b) entourent la section de combustion (2), et la section de reformage (3), la section de désulfuration (8) et la section de conversion catalytique à température basse (6b) sont disposées dans l'ordre en cercles concentriques depuis la section de combustion (2) vers l'extérieur.
